# EUROPEAN PATENT SPECIFICATION

(11) **EP 4 186 790 B1**
(45) Date of publication and mention of the grant of the patent: **01.01.2025**
(21) Application number: 22208815.5
(22) Date of filing: 22.11.2022
(51) Int. Cl.: B64C 25/00

(54) **AN AIRCRAFT LANDING GEAR BAY DOOR**
FLUGZEUGFAHRWERKSCHACHTTÜR
PORTE DE TRAVÉE DE TRAIN D'ATTERRISSAGE D'AÉRONEF

(30) Priority: 25.11.2021 FR 2112528
(43) Date of publication of application: 31.05.2023
(73) Proprietor: Airbus Operations Limited, Bristol BS34 7PA (GB); Airbus Operations (S.A.S.), 31060 Toulouse Cedex 9 (FR); Airbus Operations GmbH, 21129 Hamburg (DE)
(72) Inventor: SCOTTO, Aline, 31060 Toulouse (FR); ITASSE, Maxime, 31060 Toulouse (FR); PERKINS, Christopher, Bristol, BS34 7PA (GB); MANN, Alan, Bristol, BS34 7PA (GB); IP, Kevin, Bristol, BS34 7PA (GB); LYONS, Neil, Bristol, BS34 7PA (GB); BÜSCHER, Alexander, 21129 Hamburg (DE); MILLS, Robert, Bristol, BS34 7PA (GB)
(74) Representative: Airbus-OPS SAS

(56) References cited:
- EP-A2- 2 738 089
- WO-A1-01/04003
- WO-A1-2004/089743
- WO-A2-2005/096721
- US-A1- 2010 155 529

## Description

### BACKGROUND OF THE INVENTION

The present disclosure relates to an aircraft landing gear bay door.

The present invention concerns aircraft landing gear bay doors.

Particularly, but not exclusively, this invention concerns an aircraft landing gear bay door comprising an attachment mechanism suitable for pivotally mounting the door to an aircraft such that the door can move between a closed position, in which the door at least partially closes an aircraft landing gear bay to stow a landing gear therein, and an open position, in which the door at least partially opens the landing gear bay to allow the landing gear to deploy, and a first side arranged to face inwardly in relation to the aircraft landing gear bay when the door is closed and face towards one side of a main leg of the landing gear when the door is open and the landing gear is deployed, a second opposite side arrange to face outwardly in relation to the landing gear bay when the door is closed and thus provide an aerodynamic outer surface of the aircraft, and face away from the main leg of the landing gear when the door is open and the landing gear is deployed.

The invention also concerns an aircraft landing gear arrangement, an aircraft, methods of operating an aircraft and a method of reducing noise.

There are many different landing gear bay door arrangements, often comprising a number of doors used to open and close the landing gear bay to allow a landing gear to deploy from the bay. These doors are often generally planar (see US 8708272 , for example) and may be designed to have an external side that is contoured to match the surrounding contour of the aircraft where it is located. This is done to maintain the aerodynamic profile of the part of the aircraft where the door is located, when the door is closed. The aerodynamic profile will typically be shaped so as to reduce the drag of the aircraft when the landing gear bay doors are closed.
EP 2738089 discloses a quiet deployable landing gear door with a door flap comprising a trailing edge of the landing gear door, hinged to the landing gear door, and configured to deflect toward a landing gear strut in response to deployment of the landing gear door, and with a leading edge section comprising the leading edge of the landing gear door, coupled to the door flap, and configured to deflect toward the landing gear strut in response to deployment of the landing gear door.
WO 01/04003 discloses an aircraft, an aircraft landing gear and an apparatus including an attachment for noise reduction purposes, said attachment is shaped and positioned on the landing gear to deflect air away from noise-inducing components of the landing gear and to permit deflection and articulation movement and also stowage of the landing gear whilst the attachments are installed thereon.
US 2010/155529 discloses an aircraft noise reduction apparatus including an aircraft deployable landing gear and a noise reduction fairing comprising a wrap-around fairing which, when the landing gear is deployed, wraps around the landing gear and extends along the majority of the length of a landing gear leg.
WO 2005/096721 discloses a deployable landing gear noise attenuator that mitigates noise generated by airframe deployable landing gear.
WO 2004/089743 discloses an aircraft landing gear door assembly designed to reduce the noise generated by the interaction of the landing gear and the air flowing past it during flight, take-off and/or landing.

However, such landing gear bay doors are not designed or adapted for noise reduction purposes. In particular, there is no consideration of noise reduction when the doors are open and the landing gear is deployed, for example on landing approach. Here, it is important to reduce the noise footprint of the aircraft. This is different to wishing to reduce the drag, as that is not a concern when the aircraft is landing and slowing down anyway.

The present invention seeks to mitigate one or more of the above-mentioned problems. Alternatively or additionally, the present invention seeks to provide an improved aircraft landing gear bay door.

The project leading to this application has received funding from the European Union's Horizon 2020 research and innovation programme under grant agreement No 769350.

### SUMMARY OF THE INVENTION

The present invention provides, according to a first claimed aspect, an aircraft landing gear bay door according to claim 1. Further optional features are mentioned in the dependent claims 2-12. The present invention provides also according to a second claimed aspect, a method according to claim 13.

A door with the aerofoil profile acts to slow down the airflow flowing past the inner side. This reduces the noise of the airflow flowing past the landing gear. Hence, it means that the aircraft using such a door will have a lower noise footprint, especially when the landing gear is deployed and the aircraft is coming in to land.

Throughout the specification, the terms fore/aft, forward/backward, behind/in front, height, side etc. should be construed in relation to the conventional terms for an aircraft during normal flight. For example, upstream corresponds to a forward/fore region and downstream corresponds to a backward/aft region. Hence, if the first side directly faces the one side of a main leg of the landing gear, it will be directly facing laterally (starboard or port-wards) and so at 90 degrees to the aircraft longitudinal axis. Hence, the door itself will be roughly aligned with the direction of the aircraft longitudinal axis, when open. Height corresponds to the dimension in the upward/vertical (z) direction, in relation to a level orientation of the aircraft with respect to the ground.

The attachment mechanism may attach the door to the aircraft directly. For example, the door may be pivotally mounted adjacent to a landing gear bay of an aircraft. However, the attachment mechanism may also attach the door to a deployable landing gear leg so that the door can pivot with respect to the aircraft as the leg is deployed.

The door may be roughly aligned with (i.e. substantially in) the direction of the aircraft longitudinal axis, when open. A pivotal axis of the door relative to the aircraft may be substantially aligned with the direction of the aircraft longitudinal axis. For example, a plane containing the door (i.e. a plane enclosing the door thickness/smallest dimension) is orientated in a fore-aft direction of the aircraft, when open. For example, it may be that the door is substantially parallel to a longitudinal axis of the aircraft.

The landing gear door may be one of several landing gear doors working in combination to close and open the landing gear bay.

The first side may be contained within the landing gear bay when the door is closed. For example, it may be that only a second opposite side of the door may provide an aerodynamic surface of the aircraft when the door is closed.

Thus in certain embodiments, the second side of the door, at least when the door is deployed, may be contoured to deviate from the shape that would be defined, with the door in its closed position, by a continuance of the surrounding exterior (largely planar) contour of the aircraft (e.g. the fuselage or the landing gear fairing).

Preferably, the first side provides one half of an aerofoil profile and wherein the second side provides a corresponding other half of an aerofoil profile. In embodiments, it may be that the inner side of the door has a profile that matches one half of an aerofoil profile. For example, a lower half of an aerofoil profile. The aerofoil profile may run along a longitudinal direction of the door, in use. The outer side of the door has a profile that matches one half of an aerofoil profile. For example, both inner and outer sides of the door may provide respective halves of an aerofoil profile. For example, the half provided by the outer side may be the opposite half to the inner side of the door, for example an upper half of an aerofoil profile. The aerofoil profile may run along a longitudinal direction of the door, in use. The leading edge of the complete aerofoil profile may be located at an upstream edge of the door, when open.

More preferably, a leading edge of the aerofoil profile is located at an upstream edge of the door, when open.

Preferably, the aerofoil profile has a height corresponding to at least 80%, preferably at least 90%, of the height of the door.

Here, height refers to the vertical dimension when the door is open.

Preferably, the aerofoil profile has a camber.

The camber may move inwards or outwards from leading edge to trailing edge of the aerofoil profile. The leading edge may be nearer or further away from the landing gear leg, than the trailing edge in the lateral dimension. For example, the trailing edge may partly curve around the landing gear leg, in use.

Preferably, the trailing edge of the aerofoil profile is straight. For example, in embodiments, it may be that the aerofoil profile has an abrupt trailing edge of a certain thickness, rather than tapering to a point.

Alternatively, the trailing edge of the aerofoil profile may be tapered.

Preferably, a region of the aerofoil profile is provided with a bulged portion, bulging towards the second side of the door.

Such a curved bulged portion acts to significantly slow down airflow and hence, reduce noise. The bulged portion may be located towards a rear/trailing end of the aerofoil profile. For example, in embodiments, it may be more than halfway along the length of the aerofoil profile from the leading edge.

More preferably, the first side of the aerofoil profile is provided with the bulged portion.

For example, the first side at the bulged portion may be offset past the rest of the second side.

Even more preferably, wherein the second side of the aerofoil profile is also provided with the bulged portion.

Preferably, the shape of the door is such that along a longitudinal section of the door when open, the thickness of the door is greater than a first thickness for at least a fifth of its length in the longitudinal direction and is less than a second (lower) thickness for at least a fifth of its length in the longitudinal direction. It may be that the first thickness is at least 25% greater than, preferably 50% greater than, for example twice as great as or more than twice as great as, the second thickness.

The thickness of the door may be defined as the separation between the first side and the second side at the particular location along the longitudinal section. The longitudinal section may be taken at a mid-way point along the height of the door, when open.

The first thickness may be located upstream of the second thickness. In other words, the first (greater) thickness occurs nearer a leading edge of the door, than the second thickness.

More preferably, the thickness of the door is greater than the first thickness for at least half of its length in the longitudinal direction and is less than the second thickness for at least a fifth of its length in the longitudinal direction.

Even more preferably, the thickness of the door is greater than the first thickness for at least three fifths of its length in the longitudinal direction and is less than the second thickness for at least a fifth of its length in the longitudinal direction.

Preferably, the door comprises a moveable component, moveable from a first position when the door is closed to a second position when the door is open and wherein, in the second position, the moveable component moves to form the aerofoil profile.

This movement may be automatic, for example due to abutment of the moveable component against a door closure frame, or other part of the aircraft it contact when the door is closed.

Even more preferably, the moveable component is a memory shape component and wherein the memory shape component is biased to be in the second portion and is urged to the first position as the door closes.

For example due to abutment of the memory shape component against a door closure frame, or other part of the aircraft it contact when the door is closed. The memory shape component may, for example, comprise a memory shape alloy or a memory shape composite material.

According to a second aspect of the invention there is also provided an aircraft landing gear arrangement including the aircraft landing gear bay door as described above and a landing gear including a main landing gear leg, the main landing gear leg being pivotally mountable in relation to an aircraft landing gear bay between a stowed and a deployed position, and comprising a number of landing gear wheels arranged to roll in a fore/aft direction when in the deployed position.

Preferably, when the door is in the open position and the landing gear is in the deployed position, the aerofoil profile is at least partially aligned with the landing gear leg in the fore/aft direction. For example, it may be that the landing gear leg and the aerofoil profile are at the same longitudinal position along the aircraft, in use. The landing gear leg may be aligned with a rear/trailing end of the aerofoil profile. For example, it may be aligned with the aerofoil profile more than halfway along the length of the aerofoil profile from the leading edge.

More preferably, when the door is in the open position and the landing gear is in the deployed position, the bulged portion of the aerofoil profile is at least partially aligned with the landing gear leg in the fore/aft direction.

Preferably, when the door is in the open position and the landing gear is in the deployed position, the aerofoil profile is offset from the landing gear leg in the lateral direction by an offset distance. In other words, the landing gear leg and the aerofoil profile are separated in the dimension across the aircraft, in use. The offset distance may be at least 20mm, for example at least 30mm, preferably at least 50mm, and even more preferably at least 100mm. They may be offset by less than 5 times the width of the landing gear leg. They may be offset by less than 200mm. The offset distance may, at least in part, be dictated by the flow velocity in the region and/or by the clearance requirements between the landing gear and the door.

According to a third aspect of the invention there is also provided an aircraft comprising the aircraft landing gear bay door or the aircraft landing gear arrangement as described above.

According to a fourth aspect of the invention there is also provided a method of operating an aircraft, including the step of using the aircraft landing gear bay door, the aircraft landing gear arrangement or aircraft as described above.

According to a fifth aspect of the invention there is also provided a method of operating an aircraft comprising the steps of opening a landing gear bay door, deploying a landing gear, including a main leg, and an aerofoil profile to the door causing the velocity of the air flow in between the side of the main leg of the landing gear and the landing gear bay door to be reduced.

According to a sixth aspect of the invention there is also provided a method of reducing noise generated by a landing gear on landing approach, comprising the steps of opening a landing gear bay door, deploying a landing gear, including a main leg, and an aerofoil profile to the door causing the velocity of the air flow in between the side of the main leg of the landing gear and the landing gear bay door to be reduced.

It will of course be appreciated that features described in relation to one aspect of the present invention may be incorporated into other aspects of the present invention. For example, the method of the invention may incorporate any of the features described with reference to the apparatus of the invention and vice versa.

### DESCRIPTION OF THE DRAWINGS

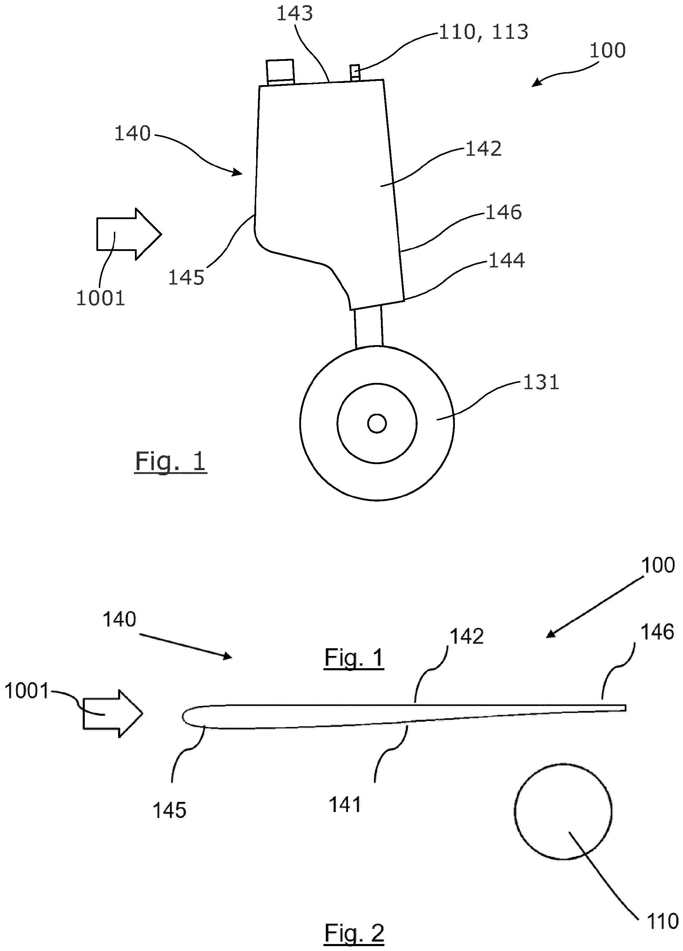

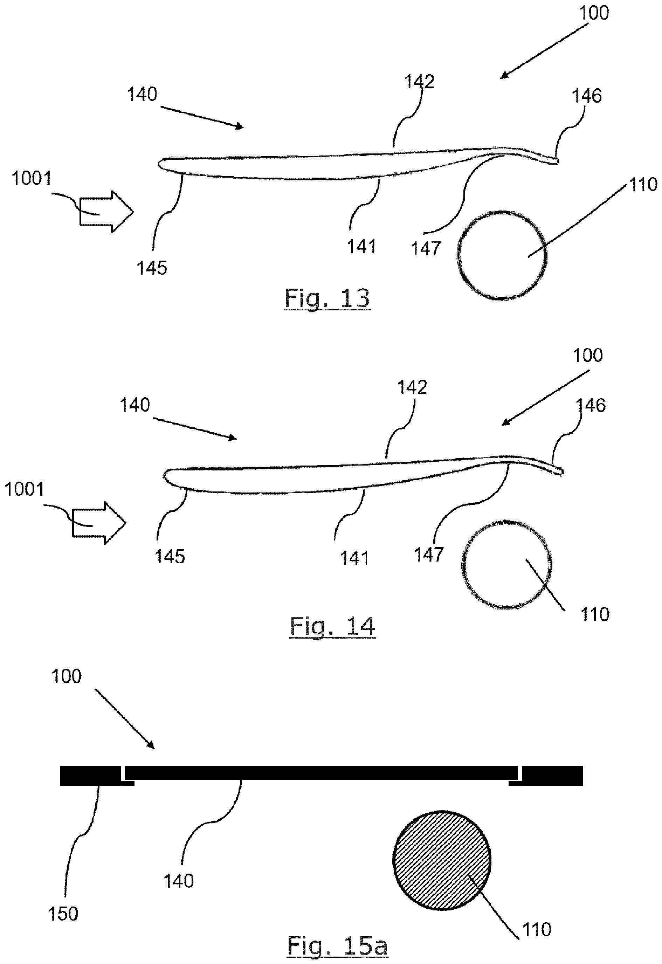

Embodiments of the present invention will now be described by way of example only with reference to the accompanying schematic drawings of which:
Figure 1
   shows a side view of a landing gear arrangement according to a first embodiment of the invention;
Figure 2
   shows a schematic plan view of the landing gear arrangement of Figure 1 ;
Figure 3
   shows a schematic plan view of a landing gear arrangement according to second embodiment of the invention;
Figure 4
   shows a schematic plan view of a landing gear arrangement according to third embodiment of the invention;
Figure 5
   shows a schematic plan view of a landing gear arrangement according to fourth embodiment of the invention;
Figure 6
   shows a schematic plan view of a landing gear arrangement according to fifth embodiment of the invention;
Figure 7
   shows a schematic plan view of a landing gear arrangement according to sixth embodiment of the invention;
Figure 8
   shows a schematic plan view of a landing gear arrangement according to seventh embodiment of the invention;
Figure 9
   shows a schematic plan view of a landing gear arrangement according to eight embodiment of the invention;
Figure 10
   shows a schematic plan view of a landing gear arrangement according to ninth embodiment of the invention;
Figure 11
   shows a schematic plan view of a landing gear arrangement according to tenth embodiment of the invention;
Figure 12
   shows a schematic plan view of a landing gear arrangement according to eleventh embodiment of the invention;
Figure 13
   shows a schematic plan view of a landing gear arrangement according to twelfth embodiment of the invention;
Figure 14
   shows a schematic plan view of a landing gear arrangement according to thirteenth embodiment of the invention;
Figure 15a
   shows a schematic upside down side view of a stowed and closed landing gear arrangement according to fourteenth embodiment of the invention;
Figure 15b
   shows a schematic plan view of the landing gear arrangement of Figure 15a , in an open and deployed configuration;
Figure 15c
   shows a schematic plan view of the landing gear arrangement of Figure 15a , in a second open and deployed configuration; and
Figure 16
   shows a schematic front view of an aircraft with a nose landing gear arrangement and two main landing gear arrangements, the landing gear arrangements being suitable for being in accordance with any of the embodiments of the invention.

### DETAILED DESCRIPTION

Figure 1 shows a side view of a landing gear arrangement 100 according to a first embodiment of the invention. Figure 2 shows a schematic plan view of the landing gear arrangement of Figure 1 .

The arrangement 100 comprises a landing gear main leg 110, which, in use, is pivotally connected to an aircraft by a pivot mechanism 113 at the top of the leg. At the bottom of the leg is an axle, which mounts two landing gear wheels, only one (labelled 131) seen in Figure 1.

The wheels roll in a fore/aft (or longitudinal) direction. A side stay (not seen) is pivotally mounted on the leg 110 and also to the aircraft, in use.

The landing gear main leg 110, side stay and axle/wheels are entirely conventional and comprise various other elements/features, such as oleo struts, support arms/braces, electrical installations, brake assemblies, actuators etc. which will not be described here.

The arrangement 100 also includes a landing gear bay door 140. The door 140 has an outer side 142 (facing away from the leg 110) and an inner side 141 (facing the leg 110). Slightly below the top edge 143 on the inner side 141 is an attachment mechanism to mount the door 140 to the leg 110.

The door 140 has a front edge 145 and a rear edge 146. The rear edge is the full door height but the front edge 145 is slightly shorter. It is the longest dimension (i.e. at the rear edge) that defines the door height. The front edge 145 is shorter as the bottom edge 144 of the door 140 is shaped to curve upwards towards the front edge 145.

The arrangement 100 is shown in relation to an oncoming airflow 1001.

As can be seen in Figure 2 , a unique feature of the door 140 is that the door 140 has a cross-sectional shape (in plan view) of that of an aerofoil. In other words, the front edge 145 has the shape of a rounded leading edge of an aerofoil and the shape tapers towards a trailing edge at the rear edge 146.

The aerofoil shape provided has a planar outer side 142. Hence, when the landing gear bay door 140 is closed in use, the planar outer side 142 forms an outside contour of the aircraft. It, in fact, provides a contour that matches/follows that of the surrounding generally planar contour of the aircraft. The aerofoil shape also has a straight edge at the rear edge 146 so as to provide a finite thickness at that edge 146.

The aerofoil shape provided has a curved concave inner side 141. Hence, when the landing gear bay door 40 is open airflow between the inner side 141 and the landing gear leg 110 is caused to slow down and thus reduce the noise generated.

The aerofoil profile shape is provided on the door along its entire height/length (i.e. from the top 143 to the bottom 144).

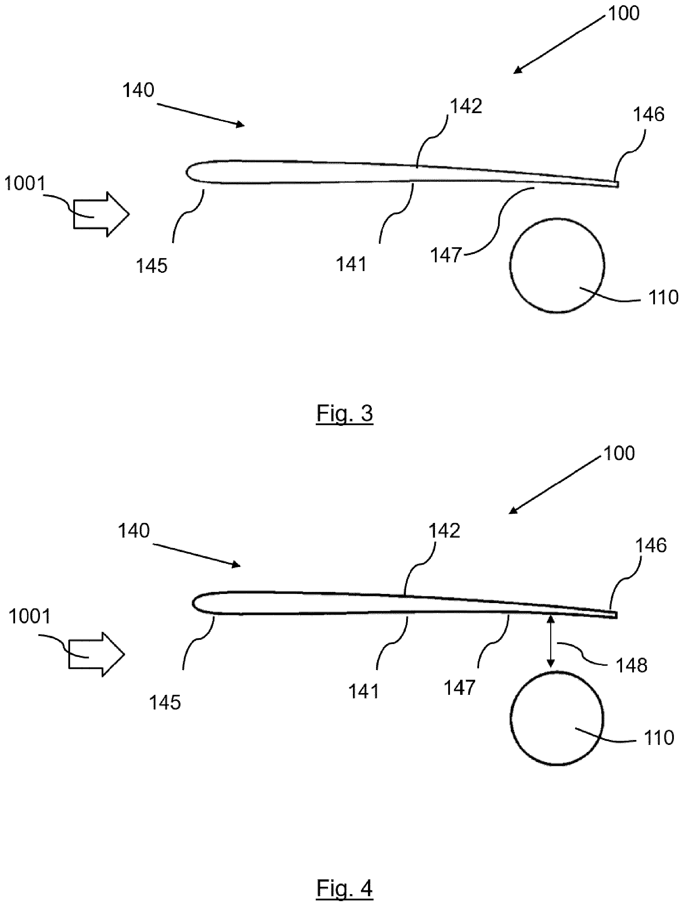

Figure 3 shows a schematic plan view of a landing gear arrangement 100 according to a second embodiment of the invention. The second embodiment is similar to the first embodiment and only the differences will be described. A side view of the second embodiment is in fact the same as the side view of the first embodiment (i.e. Figure 1 ).

Here, an aerofoil shape is still provided in the plan view, but it is a slightly different aerofoil shape. Firstly, the outer side 142 is not planar and instead provides a convex profile. Hence, when the landing gear bay door 140 is closed in use, the convex outer side 142 forms an outside contour of the aircraft. It can also be seen that the rear edge 146 is angled downwards to provide a more concave profile to the inner side 141. In particular, the landing gear leg is located in line (perpendicular to the airflow 1001) with a location near to the maximum concave point 147 of the inner side 141.

Figure 4 shows a schematic plan view of a landing gear arrangement 100 according to third embodiment of the invention. The third embodiment is similar to the second embodiment and only the differences will be described. A side view of the third embodiment is in fact the same as the side view of the second embodiment (i.e. Figure 1 ).

Here, the landing gear leg is offset from the aerofoil door 140 by an offset distance (labelled as 148) of 50mm.

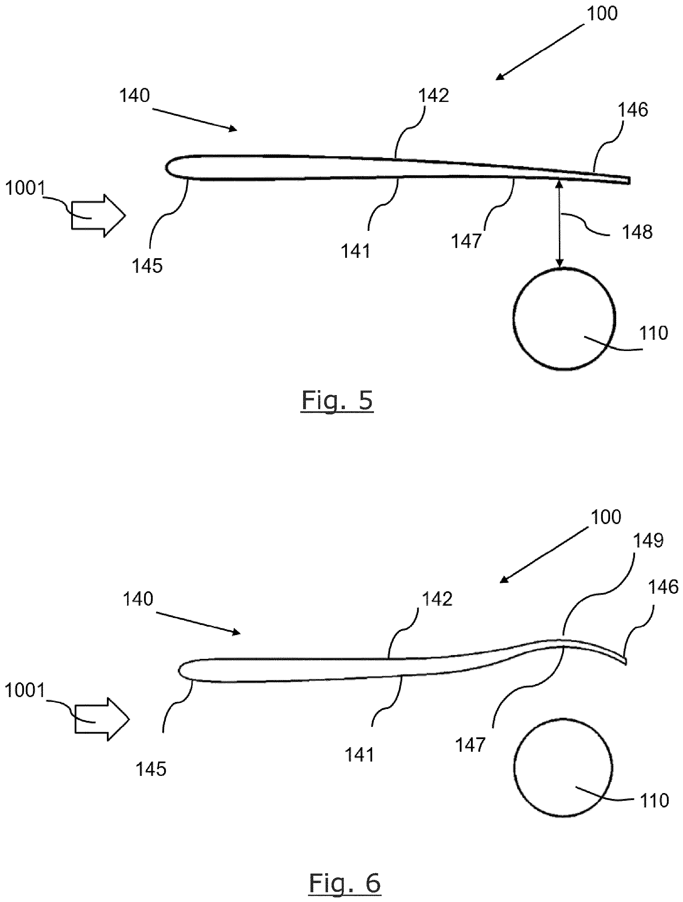

Figure 5 shows a schematic plan view of a landing gear arrangement according to fourth embodiment of the invention. The fourth embodiment is similar to the third embodiment and only the differences will be described. A side view of the fourth embodiment is in fact the same as the side view of the third embodiment (i.e. Figure 1 ).

Here, the landing gear leg is offset from the aerofoil door 140 by an offset distance (labelled as 148) of 100mm.

Figure 6 shows a schematic plan view of a landing gear arrangement 100 according to fifth embodiment of the invention. The fifth embodiment is similar to the second embodiment and only the differences will be described. A side view of the fifth embodiment is in fact the same as the side view of the second embodiment (i.e. Figure 1 ).

Here, the aerofoil shape includes a "rear bulge" 149 on the upper (outer) side 142. Hence, the outer side 142 of the door has a bulged portion, where the contour is further outwards of the rest of the outer contour of the door. This rear bulge 149 matches and corresponds to the contour of the concave shape of the inner side 141.

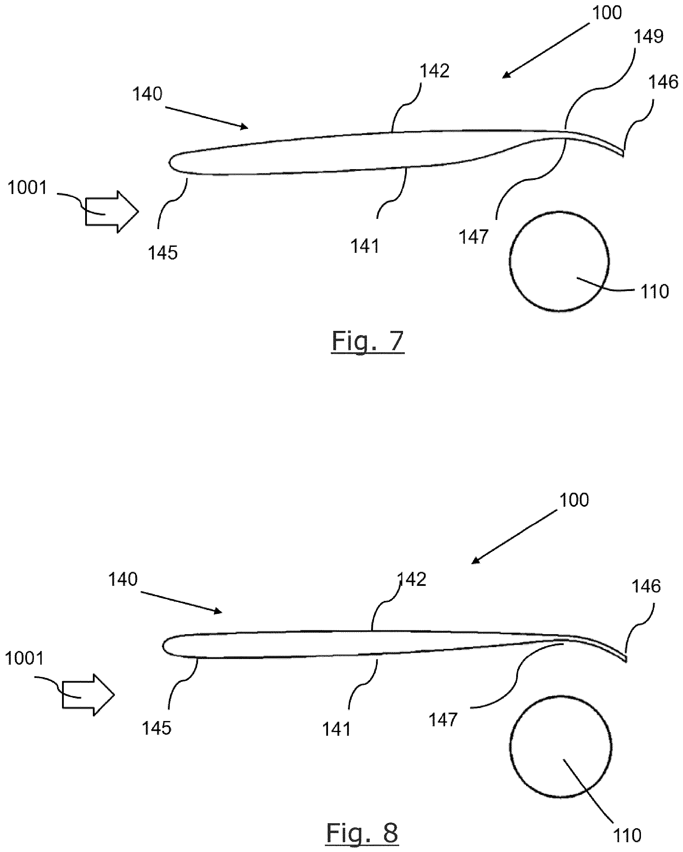

Figure 7 shows a schematic plan view of a landing gear arrangement 100 according to sixth embodiment of the invention. The sixth embodiment is similar to the fifth embodiment and only the differences will be described. A side view of the sixth embodiment is in fact the same as the side view of the fifth embodiment (i.e. Figure 1 ).

Here, the leading region of the outer side 142 is further outwards, corresponding to the level of the rear bulge of the fifth embodiment. This gives a much thicker forward region of the door 140. Hence, the outer side 142 is much more planar compared to that of the fifth embodiment. However, it still enables a concave shape in the inner side 141.

Figure 8 shows a schematic plan view of a landing gear arrangement according to seventh embodiment of the invention. The seventh embodiment is similar to the sixth embodiment and only the differences will be described. A side view of the seventh embodiment is in fact the same as the side view of the sixth embodiment (i.e. Figure 1 ).

Here, the trailing edge 146 is located much further inwards (towards the leg 110). Hence, the concave shape of the inner side 141 can be retained with a substantially planar outer side 142 and with a thinner door 140 thickness.

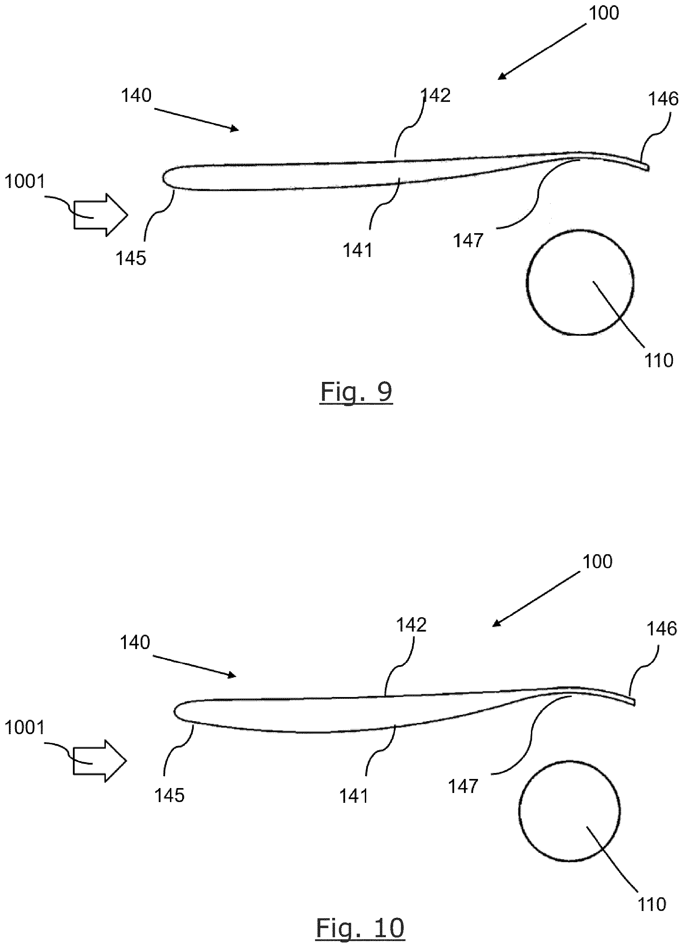

Figure 9 shows a schematic plan view of a landing gear arrangement according to eight embodiment of the invention. The eighth embodiment is similar to the fifth embodiment and only the differences will be described. A side view of the eighth embodiment is in fact the same as the side view of the fifth embodiment (i.e. Figure 1 ).

Here, the bulge 149 is much reduced meaning that the outer side 142 of the door 140 extends less far outwards. Consequently, the concave-ness of the inner side 141 is reduced.

Figure 10 shows a schematic plan view of a landing gear arrangement 100 according to ninth embodiment of the invention. The ninth embodiment is similar to the eighth embodiment and only the differences will be described. A side view of the ninth embodiment is in fact the same as the side view of the eighth embodiment (i.e. Figure 1 ).

Here, the forward portion of the inner side 141 extends further inwards and hence increases the thickness of the door 140. This means that for the same outer side 142 contour (i.e. still substantially planar), the concave-ness of the inner side 141 is increased.

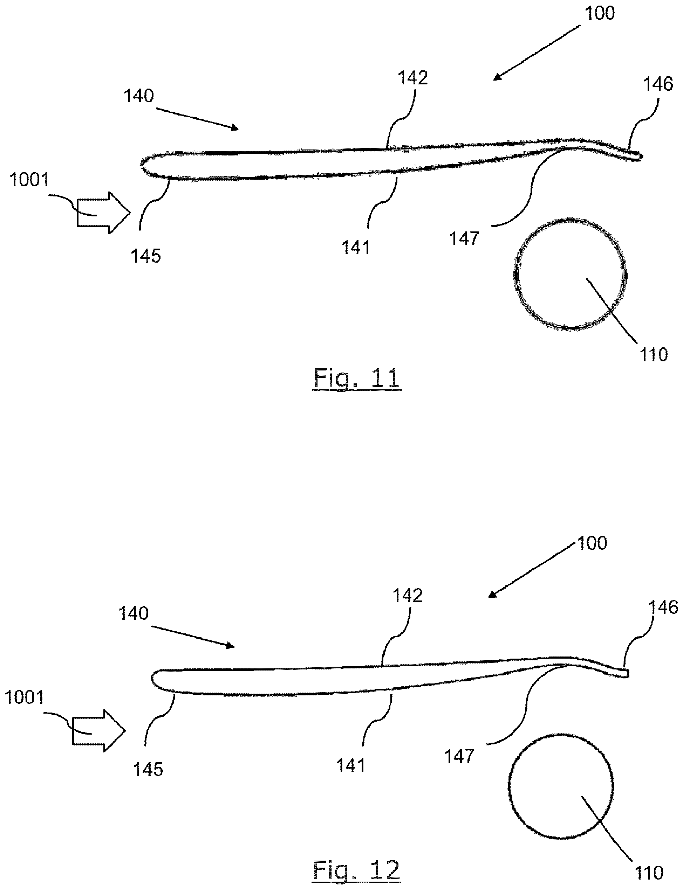

Figure 11 shows a schematic plan view of a landing gear arrangement according to tenth embodiment of the invention. The tenth embodiment is similar to the eighth embodiment and only the differences will be described. A side view of the tenth embodiment is in fact the same as the side view of the eighth embodiment (i.e. Figure 1 ).

Here, the trailing edge 146 takes on a slightly different shape with the tail being inflected so as to not extend inwards as far (if it followed the "bulge" contour). Instead, the trailing edge 146 portion is substantially straight and extends back in line with the airflow 1001.

Figure 12 shows a schematic plan view of a landing gear arrangement according to eleventh embodiment of the invention. The eleventh embodiment is similar to the tenth embodiment and only the differences will be described. A side view of the eleventh embodiment is in fact the same as the side view of the tenth embodiment (i.e. Figure 1 ).

Here, the trailing edge 146 is thicker than in the twelfth embodiment.

Figure 13 shows a schematic plan view of a landing gear arrangement according to twelfth embodiment of the invention. The twelfth embodiment is similar to the eleventh embodiment and only the differences will be described. A side view of the twelfth embodiment is in fact the same as the side view of the eleventh embodiment (i.e. Figure 1 ).

Here, the inner side 141 extends further inwards in front of the bulged portion 149 (giving a thicker leading portion of the door 140).

Figure 14 shows a schematic plan view of a landing gear arrangement according to thirteenth embodiment of the invention. The thirteenth embodiment is similar to the twelfth embodiment and only the differences will be described. A side view of the thirteenth embodiment is in fact the same as the side view of the twelfth embodiment (i.e. Figure 1 ).

Here, the outer side 142 extends further outwards at the bulge 149 so as to reduce the planar-ness of the outer surface whilst still providing a large concave-ness of the inner side 141.

Figure 15a shows a schematic upside down side view of a stowed and closed landing gear arrangement 100 according to fourteenth embodiment of the invention. In other words, this is a view looking along the leg 110 when the leg is stowed in an aircraft landing gear bay (defined by walls 150 of the aircraft surrounding the bay).

The fourteenth embodiment is similar to the first embodiment in that a shaped door 140 (e.g. any suitable aerofoil shape) is provided. However, the door shape when the door is stowed (as it is in Figure 15a ) is planar (on both sides 141, 142). The door 140 only takes up a curved shape when it is opened away from the walls 150. In other words, the door 140 is biased to take up the curved shape, but is forced to take up the planar shape of Figure 15a by the walls 150.

This could be achieved by having the door being pre-stressed and/or being made out of a memory shape alloy.

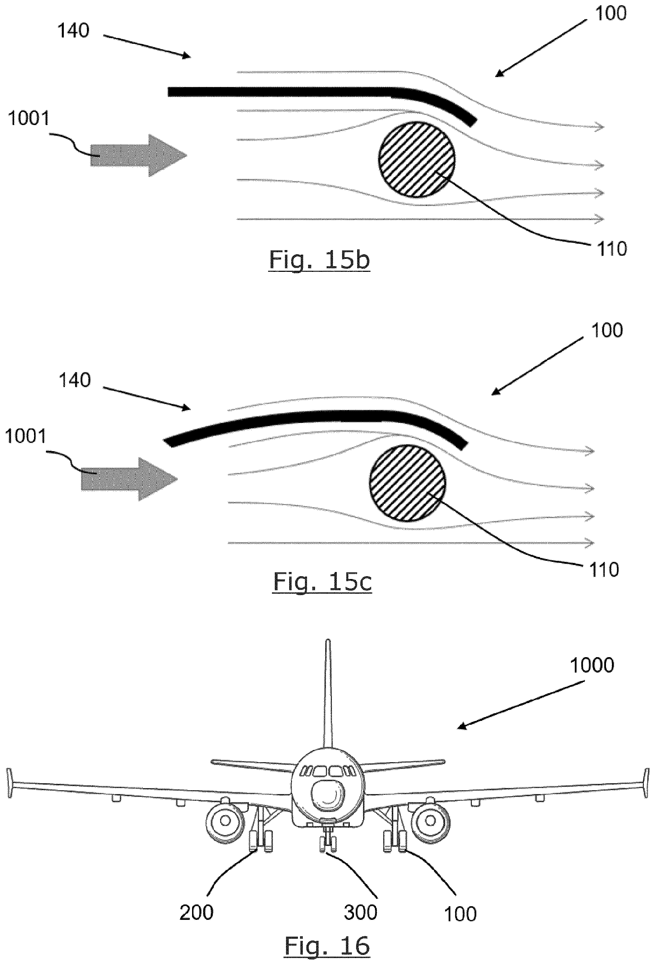

Figure 15b shows a schematic plan view of the landing gear arrangement 100 of Figure 15a , in an open and deployed configuration. Here, the door 140 has started to move away from the walls (not shown) and the trailing edge of the door has moved to curve downwards, providing a concave inner side 141 and convex outer side 142.

Figure 15c shows a schematic plan view of the landing gear arrangement of Figure 15a, in a second open and deployed configuration. As the door has moved further away from the walls, the leading edge has also curved downwards, providing an even more concave inner side 141 and even more convex outer side 142.

In Figures 15b and 15c , the resulting airflow can be seen. Airflow is directed by the trailing edge of the door smoothly behind the landing gear leg 110.

Figure 16 shows a schematic front view of an aircraft 1000 with a nose landing gear arrangement 300 and two main landing gear arrangements 100, 200, the landing gear arrangements being suitable for being in accordance with any of the embodiments of the invention.

Whilst the present invention has been described and illustrated with reference to particular embodiments, it will be appreciated by those of ordinary skill in the art that the invention lends itself to many different variations not specifically illustrated herein. By way of example only, certain possible variations will now be described.

The landing gear leg may be offset from the aerofoil door by different offset distance, being greater or less than the figures stated herein, and the distance need not be exactly the same for the length of the leg.

The door inner side 141 may not be concavely curved and instead may have any suitable curved profile.

The door outer side 142 may have any suitable profile. The outline of the door may be differently shaped for a different aircraft in view of the shape of the opening of the landing gear bay required to allow the deployment therethrough of the landing gear, which may be differently configured depending on the design of the aircraft concerned. For example, not all landing gear legs are provided with a side stay.

The door rear edge 146 may taper to a point instead of having a straight end.

The door may be made of any suitable material. It may be 3D printed.

The door 140 may be attached directly to an aircraft (not via the leg 110). For example, at the door top edge 143 may be an attachment mechanism to pivotally mount the door 140 to an aircraft, in use.

It will be appreciated that the landing gear leg 110 may have any suitable number of wheels, for example being greater than two.

Although the invention has been described above mainly in the context of a fixed-wing aircraft application, it may also be advantageously applied to various other applications, including but not limited to applications on vehicles such as helicopters, drones, trains, automobiles and spacecraft.

## Claims

1. An aircraft landing gear bay door (140) comprising:
i) an attachment mechanism suitable for pivotally mounting the door (140) to an aircraft such that the door (140) can move between a closed position, in which the door (140) at least partially closes an aircraft landing gear bay to stow a landing gear therein, and an open position, in which the door (140) at least partially opens the landing gear bay to allow the landing gear to deploy,
ii) a first side (141) arranged to face inwardly in relation to the aircraft landing gear bay when the door (140) is closed and face towards one side of a main leg (110) of the landing gear when the door (140) is open and the landing gear is deployed, and
iii) a second opposite side (142) arrange to face outwardly in relation to the landing gear bay when the door (140) is closed and thus provide an aerodynamic outer surface of the aircraft, and face away from the main leg (110) of the landing gear when the door (140) is open and the landing gear is deployed,
wherein the shape formed from the first and second sides (141, 142) provides an aerofoil profile of the door (140) ,
**characterized in that** the shape of the door (140) is such that along a longitudinal section of the door (140) when open, the thickness of the door (140) is greater than a first thickness for at least a fifth of its length in the longitudinal direction and is less than a second thickness for at least a fifth of its length in the longitudinal direction, the first thickness being at least twice as great as the second thickness.

2. The aircraft landing gear bay door (140) as claimed in claim 1, wherein the trailing edge of the aerofoil profile is tapered.

3. The aircraft landing gear bay door (140) as claimed in any preceding claim, wherein a region of the aerofoil profile is provided with a bulged portion (149), bulging towards the second side (142) of the door (140).

4. The aircraft landing gear bay door (140) as claimed in claim 3, wherein the first side (141) of the aerofoil profile is provided with the bulged portion (149).

5. The aircraft landing gear bay door (140) as claimed in claim 4, wherein the second side (142) of the aerofoil profile is also provided with the bulged portion (149).

6. The aircraft landing gear bay door (140) as claimed in any preceding claim, wherein the thickness of the door (140) is greater than the first thickness for at least half of its length in the longitudinal direction and is less than the second thickness for at least a fifth of its length in the longitudinal direction.

7. The aircraft landing gear bay door (140) as claimed in claim 6, wherein the thickness of the door (140) is greater than the first thickness for at least three fifths of its length in the longitudinal direction and is less than the second thickness for at least a fifth of its length in the longitudinal direction.

8. The aircraft landing gear bay door (140) as claimed in any preceding claim, wherein the door (140) comprises a moveable component, moveable from a first position when the door (140) is closed to a second position when the door (140) is open and wherein, in the second position, the moveable component moves to form the aerofoil profile, preferably wherein the moveable component is a memory shape component and wherein the memory shape component is biased to be in the second portion and is urged to the first position as the door (140) closes.

9. An aircraft landing gear arrangement (100) including the aircraft landing gear bay door (140) of any preceding claim and a landing gear including a main landing gear leg (110) , the main landing gear leg (110) being pivotally mountable in relation to an aircraft landing gear bay between a stowed and a deployed position, and comprising a number of landing gear wheels (131) arranged to roll in a fore/aft direction when in the deployed position, preferably wherein, when the door (140) is in the open position and the landing gear is in the deployed position, the aerofoil profile is at least partially aligned with the landing gear leg (110) in the fore/aft direction.

10. The aircraft landing gear arrangement (100) according to claim 9, when dependent on any of claims 3 to 5, wherein, when the door (140) is in the open position and the landing gear is in the deployed position, the bulged portion of the aerofoil profile is at least partially aligned with the landing gear leg (110) in the fore/aft direction.

11. The aircraft landing gear arrangement (100) according to claim 9 or 10, wherein, when the door (140) is in the open position and the landing gear is in the deployed position, the aerofoil profile is offset from the landing gear leg (110) in the lateral direction by an offset distance of at least 30mm, preferably at least 50mm, and even more preferably at least 100mm.

12. An aircraft comprising the aircraft landing gear bay door (140) of any of claims 1 to 8, or the aircraft landing gear arrangement (100) of any of claims 9 to 11.

13. A method of operating an aircraft, including the step of using the aircraft landing gear bay door (140) of any of claims 1 to 8, or the aircraft landing gear arrangement of any of claims 9 to 11, or the aircraft of claim 12.

## Patentansprüche

1. Luftfahrzeugfahrwerkschachttür (140), die Folgendes umfasst:
i) einen Befestigungsmechanismus, der zum schwenkbaren Montieren der Tür (140) an einem Luftfahrzeug geeignet ist, so dass sich die Tür (140) zwischen einer geschlossenen Position, in der die Tür (140) zumindest teilweise einen Luftfahrzeugfahrwerkschacht verschließt, um ein Fahrwerk darin zu verstauen, und einer geöffneten Position, in der die Tür (140) den Fahrwerkschacht zumindest teilweise öffnet, um ein Ausfahren des Fahrwerks zu ermöglichen, bewegen kann,
ii) eine erste Seite (141), die so angeordnet ist, dass sie in Relation zu dem Luftfahrzeugfahrwerkschacht nach innen weist, wenn die Tür (140) geschlossen ist, und zu einer Seite eines Hauptbeins (110) des Fahrwerks weist, wenn die Tür (140) geöffnet ist und das Fahrwerk ausgefahren ist, und
iii) eine zweite gegenüberliegende Seite (142), die so angeordnet ist, dass sie in Relation zu dem Fahrwerkschacht nach außen weist, wenn die Tür (140) geschlossen ist, und somit eine aerodynamische Außenfläche des Luftfahrzeugs bereitstellt, und von dem Hauptbein (110) des Fahrwerks weg weist, wenn die Tür (140) geöffnet ist und das Fahrwerk ausgefahren ist,
wobei die von der ersten und der zweiten Seite (141, 142) gebildete Form ein Tragflächenprofil der Tür (140) bereitstellt,
**dadurch gekennzeichnet, dass** die Form der Tür (140) derart ist, dass entlang eines Längsschnitts der Tür (140), wenn sie geöffnet ist, die Dicke der Tür (140) für mindestens ein Fünftel ihrer Länge in der Längsrichtung größer als eine erste Dicke ist und für mindestens ein Fünftel ihrer Länge in der Längsrichtung kleiner als eine zweite Dicke ist, wobei die erste Dicke mindestens doppelt so groß wie die zweite Dicke ist.

2. Luftfahrzeugfahrwerkschachttür (140) nach Anspruch 1, wobei die Hinterkante des Tragflächenprofils verjüngt ist.

3. Luftfahrzeugfahrwerkschachttür (140) nach einem der vorhergehenden Ansprüche, wobei ein Bereich des Tragflächenprofils mit einem gewölbten Abschnitt (149) versehen ist, der zu der zweiten Seite (142) der Tür (140) hin gewölbt ist.

4. Luftfahrzeugfahrwerkschachttür (140) nach Anspruch 3, wobei die erste Seite (141) des Tragflächenprofils mit dem gewölbten Abschnitt (149) versehen ist.

5. Luftfahrzeugfahrwerkschachttür (140) nach Anspruch 4, wobei die zweite Seite (142) des Tragflächenprofils auch mit dem gewölbten Abschnitt (149) versehen ist.

6. Luftfahrzeugfahrwerkschachttür (140) nach einem der vorhergehenden Ansprüche, wobei die Dicke der Tür (140) für mindestens die Hälfte ihrer Länge in der Längsrichtung größer als die erste Dicke ist und für mindestens ein Fünftel ihrer Länge in der Längsrichtung kleiner als die zweite Dicke ist.

7. Luftfahrzeugfahrwerkschachttür (140) nach Anspruch 6, wobei die Dicke der Tür (140) für mindestens drei Fünftel ihrer Länge in der Längsrichtung größer als die erste Dicke ist und für mindestens ein Fünftel ihrer Länge in der Längsrichtung kleiner als die zweite Dicke ist.

8. Luftfahrzeugfahrwerkschachttür (140) nach einem der vorhergehenden Ansprüche, wobei die Tür (140) eine bewegliche Komponente umfasst, die von einer ersten Position, wenn die Tür (140) geschlossen ist, in eine zweite Position, wenn die Tür (140) geöffnet ist, beweglich ist, und wobei sich die bewegliche Komponente in der zweiten Position derart bewegt, dass das Tragflächenprofil gebildet wird, vorzugsweise wobei die bewegliche Komponente eine Gedächtnisformkomponente ist und wobei die Gedächtnisformkomponente derart vorgespannt ist, dass sie sich in dem zweiten Abschnitt befindet, und in die erste Position gedrückt wird, wenn sich die Tür (140) schließt.

9. Luftfahrzeugfahrwerkanordnung (100), die die Luftfahrzeugfahrwerkschachttür (140) nach einem der vorhergehenden Ansprüche und ein Fahrwerk beinhaltet, das ein Hauptfahrwerkbein (110) beinhaltet, wobei das Hauptfahrwerkbein (110) in Relation zu einem Luftfahrzeugfahrwerkschacht zwischen einer verstauten und einer ausgefahrenen Position schwenkbar montierbar ist, und umfassend eine Anzahl von Fahrwerksrädern (131), die derart angeordnet sind, dass sie in einer Vorwärts-/Rückwärtsrichtung rollen, wenn sie sich in der ausgefahrenen Position befinden, wobei vorzugsweise, wenn sich die Tür (140) in der geöffneten Position befindet und sich das Fahrwerk in der ausgefahrenen Position befindet, das Tragflächenprofil zumindest teilweise mit dem Fahrwerksbein (110) in der Vorwärts-/Rückwärtsrichtung ausgerichtet ist.

10. Luftfahrzeugfahrwerkanordnung (100) nach Anspruch 9, wenn abhängig von einem der Ansprüche 3 bis 5, wobei, wenn sich die Tür (140) in der geöffneten Position befindet und sich das Fahrwerk in der ausgefahrenen Position befindet, der gewölbte Abschnitt des Tragflächenprofils zumindest teilweise mit dem Fahrwerksbein (110) in der Vorwärts-/Rückwärtsrichtung ausgerichtet ist.

11. Luftfahrzeugfahrwerkanordnung (100) nach Anspruch 9 oder 10, wobei, wenn sich die Tür (140) in der geöffneten Position befindet und sich das Fahrwerk in der ausgefahrenen Position befindet, das Tragflächenprofil von dem Fahrwerkbein (110) in der lateralen Richtung um einen Versatzabstand von mindestens 30 mm, vorzugsweise mindestens 50 mm und noch stärker bevorzugt mindestens 100 mm versetzt ist.

12. Luftfahrzeug, umfassend die Luftfahrzeugfahrwerkschachttür (140) nach einem der Ansprüche 1 bis 8 oder die Luftfahrzeugfahrwerkanordnung (100) nach einem der Ansprüche 9 bis 11.

13. Verfahren zum Betreiben eines Luftfahrzeugs, das den Schritt Verwenden der Luftfahrzeugfahrwerkschachttür (140) nach einem der Ansprüche 1 bis 8 oder der Luftfahrzeugfahrwerkanordnung nach einem der Ansprüche 9 bis 11 oder des Luftfahrzeugs nach Anspruch 12 beinhaltet.

## Revendications

1. Porte de travée de train d'atterrissage d'aéronef (140) comprenant :
i) un mécanisme de fixation permettant de monter la porte (140) de manière pivotante sur un aéronef, de sorte que la porte (140) puisse se déplacer entre une position fermée, dans laquelle la porte (140) ferme au moins partiellement une travée de train d'atterrissage d'aéronef pour y ranger un train d'atterrissage, et une position ouverte, dans laquelle la porte (140) ouvre au moins partiellement la travée de train d'atterrissage pour permettre au train d'atterrissage de se déployer,
ii) un premier côté (141) conçu pour être orienté vers l'intérieur par rapport à la travée de train d'atterrissage d'aéronef lorsque la porte (140) est fermée et être orienté vers un côté d'une jambe principale (110) du train d'atterrissage lorsque la porte (140) est ouverte et que le train d'atterrissage est déployé, et
iii) un second côté (142) opposé conçu pour être orienté vers l'extérieur par rapport à la travée de train d'atterrissage lorsque la porte (140) est fermée et constituant ainsi une surface extérieure aérodynamique de l'aéronef, et être orienté à l'opposé de la jambe principale (110) du train d'atterrissage lorsque la porte (140) est ouverte et que le train d'atterrissage est déployé,
la forme formée à partir des premier et second côtés (141, 142) fournissant un profil aérodynamique de la porte (140),
**caractérisée en ce que** la forme de la porte (140) est telle que sur une section longitudinale de la porte (140) ouverte, l'épaisseur de la porte (140) soit supérieure à une première épaisseur sur au moins un cinquième de sa longueur dans la direction longitudinale et soit inférieure à une seconde épaisseur sur au moins un cinquième de sa longueur dans la direction longitudinale, la première épaisseur étant au moins deux fois plus grande que la seconde épaisseur.

2. Porte de travée de train d'atterrissage d'aéronef (140) selon la revendication 1, le bord de fuite du profil aérodynamique étant effilé.

3. Porte de travée de train d'atterrissage d'aéronef (140) selon l'une quelconque des revendications précédentes, une zone du profil aérodynamique étant pourvue d'une partie bombée (149), bombée vers le second côté (142) de la porte (140).

4. Porte de travée de train d'atterrissage d'aéronef (140) selon la revendication 3, le premier côté (141) du profil aérodynamique étant pourvu d'une partie bombée (149) .

5. Porte de train d'atterrissage d'aéronef (140) selon la revendication 4, le second côté (142) du profil aérodynamique étant également pourvu de la partie bombée (149) .

6. Porte de travée de train d'atterrissage d'aéronef (140) selon l'une quelconque des revendications précédentes, l'épaisseur de la porte (140) étant supérieure à la première épaisseur sur au moins la moitié de sa longueur dans la direction longitudinale et étant inférieure à la seconde épaisseur sur au moins un cinquième de sa longueur dans la direction longitudinale.

7. Porte de travée de train d'atterrissage d'aéronef (140) selon la revendication 6, l'épaisseur de la porte (140) étant supérieure à la première épaisseur sur au moins trois cinquièmes de sa longueur dans la direction longitudinale et étant inférieure à la seconde épaisseur sur au moins un cinquième de sa longueur dans la direction longitudinale.

8. Porte de travée de train d'atterrissage d'aéronef (140) selon l'une quelconque des revendications précédentes, la porte (140) comprenant un élément mobile, pouvant passer d'une première position lorsque la porte (140) est fermée à une seconde position lorsque la porte (140) est ouverte et, dans la seconde position, l'élément mobile se déplaçant pour former le profil aérodynamique, de préférence l'élément mobile étant un élément à mémoire de forme et l'élément à mémoire de forme étant sollicité pour se trouver dans la seconde partie et étant poussé vers la première position lorsque la porte (140) se ferme.

9. Agencement de train d'atterrissage d'aéronef (100) comprenant la porte de travée de train d'atterrissage d'aéronef (140) selon l'une quelconque des revendications précédentes et un train d'atterrissage comprenant une jambe de train d'atterrissage principale (110), la jambe de train d'atterrissage principale (110) pouvant être montée de manière pivotante par rapport à une travée de train d'atterrissage d'aéronef entre une position rangée et une position déployée, et comprenant un certain nombre de roues de train d'atterrissage (131) conçues pour rouler dans une direction avant/arrière lorsqu'elles sont en position déployée, de préférence, lorsque la porte (140) est en position ouverte et que le train d'atterrissage est en position déployée, le profil aérodynamique étant au moins partiellement aligné avec la jambe de train d'atterrissage (110) dans la direction avant/arrière.

10. Agencement de train d'atterrissage d'aéronef (100) selon la revendication 9, lorsqu'elle dépend de l'une quelconque des revendications 3 à 5, lorsque la porte (140) est en position ouverte et que le train d'atterrissage est en position déployée, la partie bombée du profil aérodynamique étant au moins partiellement alignée avec la jambe de train d'atterrissage (110) dans la direction avant/arrière.

11. Agencement de train d'atterrissage d'aéronef (100) selon la revendication 9 ou 10, lorsque la porte (140) est en position ouverte et que le train d'atterrissage est en position déployée, le profil aérodynamique étant décalé de la jambe de train d'atterrissage (110) dans la direction latérale d'une distance de décalage d'au moins 30 mm, de préférence d'au moins 50 mm, et encore plus préférentiellement d'au moins 100 mm.

12. Agencement comprenant la porte de travée de train d'atterrissage (140) selon l'une quelconque des revendications 1 à 8, ou l'agencement de train d'atterrissage d'aéronef (100) selon l'une quelconque des revendications 9 à 11.

13. Procédé de fonctionnement d'un aéronef, comprenant l'étape consistant à utiliser la porte de travée de train d'atterrissage (140) selon l'une quelconque des revendications 1 à 8, ou l'agencement de train d'atterrissage selon l'une quelconque des revendications 9 à 11, ou l'aéronef selon la revendication 12.
